# EUROPÄISCHE PATENTSCHRIFT

(11) **EP 1 954 119 B1**
(45) Veröffentlichungstag und Bekanntmachung des Hinweises auf die Patenterteilung: **21.07.2010**
(21) Anmeldenummer: 06761277.0
(22) Anmeldetag: 11.08.2006
(51) Int. Cl.: A01G 25/16, A01G 27/00

(54) **BEWÄSSERUNGSSYSTEM ZUR BEWÄSSERUNG VON PFLANZEN**
WATERING SYSTEM FOR WATERING PLANTS
SYSTEME D'IRRIGATION POUR L'IRRIGATION DE PLANTES

(30) Priorität: 23.11.2005 CH 18662005
(43) Veröffentlichungstag der Anmeldung: 13.08.2008
(73) Patentinhaber: Plantcare AG, 8332 Russikon (CH)
(72) Erfinder: SCHMIDT, Walter, CH-8332 Russikon (CH)
(74) Vertreter: Frei Patent Attorneys
(86) Internationale Anmeldenummer: PCT/CH2006/000426
(87) Internationale Veröffentlichungsnummer: WO 2007/059636

(56) Entgegenhaltungen:
- WO-A-2005/067696
- DE-A1- 10 330 141
- DE-A1-102004 051 438

## Beschreibung

Die Erfindung liegt auf dem Gebiet der Bewässerungssysteme für Pflanzen, insbesondere von automatisierten Systemen, wie Sie im Verfahren, der Vorrichtung und der Anordnung in den Patentansprüchen definiert sind.

Der Bedarf an automatischen arbeitenden Anlagen zur Bewässerung von Balkon- oder Terrassenbepflanzungen steigt ständig, da einerseits die Bewohner immer häufiger über längere Zeit abwesend sind und es immer schwieriger wird Personen zu finden, die bereit sind die Pflanzen in der Zwischenzeit zu pflegen. Andererseits gewinnt der Balkon oder die Terrasse zunehmend an Bedeutung und wird mehr und mehr in den Wohnbereich mit einbezogen. Zudem haben die Bewohner selbst oftmals nicht die Zeit und auch das Wissen, die Pflanzen optimal zu betreuen und müssen feststellen, dass teure Kübelpflanzen durch Staunässe oder aber auch durch zu grosse bzw. lange Trockenheit absterben.

Automatisch arbeitende Bewässerungssysteme für Balkon- und Terrassenpflanzen sind schon lange auf den Markt, haben sich aber aus mehreren Gründen nicht richtig durchsetzen können.

Die meisten der bekannten Systeme benötigen einen Wasseranschluss, der meist, insbesondere auf Balkonen, nicht vorhanden ist. In vielen Fällen wird auch ein Stromanschluss verlangt, der ebenfalls oftmals nicht vorhanden ist.

Eine Automatik zur Bewässerung basiert zudem in den meisten Fällen auf der Basis einer Zeitschaltuhr, die so programmiert werden kann, dass zu bestimmten Zeiten, eine einstellbare Zeit lang begossen wird. Der Einfluss von klimatischen Bedingungen wird dabei nicht berücksichtigt, d.h. an kalten oder sonnenlosen Tagen, oder bei Regen, wird genau so oft und viel gegossen, wie an heissen Tagen.

Eine Verbesserung wird in DE 103 30 141 vorgeschlagen. Diese Schrift beschreibt ein elektronisch arbeitendes Regelsystem, in welchem die Substratfeuchte, sowie die Umgebungstemperatur gemessen werden um eine Bewässerungsdauer zu optimieren.

Um eine gewisse Anpassung an die aktuellen klimatischen Bedingungen zu erreichen, wurden verschiedene Erdfeuchtesensoren entwickelt. Da diese für Massenanwendungen sehr günstig sein sollen, werden Verfahren, wie beispielsweise die Tensiometer - Methode, verwendet, die aber ihre Nachteile hat, wie beispielsweise ein leicht verstopfender verkalkender poröser Messkörper.

Die meisten der bekannten Bewässerungssysteme verwenden eine so genannte Tropfbewässerung, bei der in einen Verteilschlauch feine Tropfdüsen eingebracht werden, aus denen eine vorherbestimmte Zeit lang Wasser tröpfelt. Diese feinen Tropfdüsen verkalken rasch oder verstopfen sogar, was die Wassermenge teilweise oder ganz reduziert, praktisch aber nicht erkennbar ist. Ausserdem müssen die Verteilschläuche oberflächlich verlegt werden, was optisch nicht sehr ansprechend ist.

Terrassen werden meist mit unterschiedlichen Pflanzen mit unterschiedlicher Grösse und Wasserbedarf bepflanzt. Eine differenzierte Wassergabe ist fast unmöglich, so dass alle Pflanzen mehr oder weniger gleich begossen werden. Pflanzen sind jedoch lebende Wesen, die wachsen und mit der Zeit bzw. je nach äusseren Bedingungen mehr oder weniger Wasser und Nährstoffe benötigen. Die bekannten Systeme sind nicht in der Lage sich automatisch an langsam verändernde Bedürfnisse von Pflanzen anzupassen.

Unter anderem aus den oben genannten Gründen haben die so genannt automatischen Bewässerungssysteme noch keine breite Anwendung gefunden.

Aufgabe der vorliegenden Erfindung ist es, ein Verfahren und eine Vorrichtung zur automatischen Bewässerung von Pflanzen, insbesondere von Topf- und Kübelpflanzen, zu schaffen, welche oben genannte Nachteile vermeiden und welches Verfahren kostengünstig durchgeführt und welche Vorrichtung kostengünstig hergestellt werden kann.

Die Aufgabe wird durch das Verfahren und die Vorrichtung gelöst, wie sie in den Patentansprüchen definiert ist.

Die Bewässerung von Pflanzen, insbesondere Topf- und Kübelpflanzen, aber auch Gartenpflanzen und Rasen, geschieht mittels eines elektronisch arbeitenden Regelsystems. Mit einem Feuchtesensor wird die Feuchte eines Substrates, insbesondere Erde, Lehm, Sand, Blähton, oder Mischungen davon, in vorzugsweise regelmässigen Zeitabständen gemessen. Diese Messwerte werden gespeichert und mittels eines geeignetes Auswertealgorithmus auf eine Feuchteentwicklung hin ausgewertet. Ein so ermitteltes Trend wird zur Nachregelung bzw. Nachjustierung einer zu giessenden Wassermenge herangezogen.

In einer Ausführungsform des Verfahrens wird die Anzahl von Messzyklen, die zwischen zwei Giessvorgängen stattfinden zur Nachregelung der Wassermenge herangezogen. Dabei kann vorab eine Zeitspanne zwischen zwei Feuchtemessungen und eine zu giessende Wassermenge pro Giessvorgang festgelegt werden. Liegt eine Feuchtemessung eines im Pflanzensubstrat eingebrachten Feuchtesensors unter einer vorgegebenen Feuchteschwelle, so wird der Giessvorgang ausgelöst. Andernfalls wird nach Ablauf der vorgegebenen Zeitspanne einfach eine weitere Feuchtemessung durchgeführt. Steigt nun ein Wasserbedarf einer Pflanze über die Zeit, z. B. Tage, Wochen oder Monate, so werden die Giessvorgänge immer häufiger ausgelöst. Dieser Trend wird entsprechend festgestellt und die zu giessende Wassermenge pro Giessvorgang wird, vorzugsweise in vorgegebenen Schritten, erhöht.

Stellt beispielsweise eine Steuerelektronik in der Regeleinheit fest, dass bereits nach wenigen Messzyklen schon wieder nachgegossen werden muss, dann wird die Giessmenge automatisch um einen bestimmten Betrag erhöht. Dies vorzugsweise solange, bis die zeitlichen Abstände zwischen zwei Giesszyklen innerhalb einer vorgegebenen Bandbreite zu liegen kommen. Stellt die Regeleinheit hingegen fest, dass zwischen zwei Giessvorgängen sehr lange Zeit verstreicht, so bedeutet dies, dass zu viel Wasser im Erdreich vorhanden ist, und die Giessmenge kann automatisch um einen bestimmten Betrag reduziert werden. Dies geschieht vorzugsweise wiederum solange, bis das Zeitintervall zwischen zwei Giessvorgängen innerhalb einer vorgegebenen Bandbreite liegt. Ein solches Zeitintervall kann beispielsweise über eine Anzahl von Feuchtemessungen bestimmt und/oder festgelegt werden.

Eine Regelung mit Feuchteschwellwerten hat den Vorteil, dass nur dann Wasser nachgegossen wird, wenn die Pflanze es wirklich benötigt. Es kommt daher bei entsprechender Einstellung eines Feuchteschwellwertes, zwischen Giessvorgängen immer wieder zu einer teilweisen Austrocknung der Erde, was für das Gedeihen der Pflanze von Vorteil ist, da die Wurzeln auch mit Sauerstoff versorgt werden müssen. Die Regelung kann auch so gestaltet werden, dass schon nach einer leichten Austrocknung nachgegossen wird. So könnte man die Feuchte zeitlich praktisch konstant halten. Die ist jedoch für viele Pflanzen eher nachteilig.

Das erfindungsgemässe Verfahren hat auch den Vorteil, dass die Ersteinstellung der pro Giesszyklus zu giessenden Wassermenge nur ungefähr bestimmt werden muss. Die Regelung justiert die Giessmenge automatisch so ein, dass ein Optimum der Bodenfeuchte und deren zeitlicher Verlauf erreicht wird. Zudem erkennt die Regelelektronik auch, wenn die Pflanzen wachsen und mit der Zeit mehr Wasser benötigen. Dies wird automatisch nachgeregelt. Auch bei länger währenden heissen oder regnerischen Phasen wird die Giessmenge dem effektivem Verbrauch angepasst.

Für die erfindungsgemässe Vorrichtung wir vorzugsweise ein günstig herstellbarer, zuverlässiger Sensor zur Messung der Feuchte in Pflanzensubstraten verwendet. Vorzugsweise wird ein Sensor verwendet, wie er beispielsweise in der Patentanmeldung mit der Anmeldenummer PCT/CH2005/000663 beschrieben ist.

Dies ist ein kostengünstig herstellbarer Sensor, der mit hoher Sensitivität den Wassergehalt von Erdsubstraten jeglicher Art messen kann. Dieser Sensor, basierend auf einem thermischen Messprinzip, kann dazu verwendet werden, eine Vorrichtung zuverlässig mit Information über den aktuellen Feuchte-Status eines Substrates zu versorgen. Werden Abkühlkurven gemessen und zur Feuchtebestimmung herangezogen, können diese sehr sensitiv auf zu messende Bereiche eingestellt werden.

Die erfindungsgemässe Vorrichtung ist vorzugsweise miniaturisiert, indem alle für eine automatische Bewässerung wesentlichen Teile in der Vorrichtung integriert sind. Eine erfindungsgemässe Vorrichtung beinhaltet somit vorzugsweise eine Regeleinheit, ein Bedien-/Anzeigepanel, eine Pumpe, eine Stromversorgung, sowie einen Feuchtesensor und Verbindungen zu einem Wasserreservoir. Die einzelnen Komponenten sind vorzugsweise abnehmbar aneinander befestigt, und sowie die Verbindungen, bevorzugt flüssigkeitsdicht ausgestaltet, bspw. in einem wasserdichten Gehäuse untergebracht.

Die Bewässerungsvorrichtung ist bevorzugt so gestaltet, dass sie sowohl in bestehende Pflanztöpfe und -kübel integriert, als auch von extern in die Pflanztöpfe eingesetzt werden kann.

Über ein Bedien- und Anzeigepanel ist es möglich diverse Einstellungen vorzunehmen und anzeigen zu lassen. Dies sind beispielsweise verschiedene Schwellwerte für Abkühlzeiten bei einem Feuchtemesssensor mit thermischem Messverfahren, d.h. Schwellwerte der Bodenfeuchte können eingestellt werden, um je nach Pflanzentyp optimale Bedingungen für eher nass liebende, normal feucht liebende, oder eher trocken liebende Pflanzen zu wählen.

Ausserdem ist es in der Regel ein grosser Unterschied, ob sich eine Pflanze in einem Aussenbereich (outdoor) oder in Innenräumen (indoor) befindet. Bei IndoorAnwendungen ändert sich die Feuchte üblicherweise wesentlich langsamer als in Aussenbereichen. Im Aussenbereich bewirkt die Sonneneinstrahlung und auch die trocknende Wirkung von Wind einen wesentlich höheren Wasserverbrauch. Das bedeutet, dass für Indooranwendungen eine längere Zeitspanne zwischen zwei Messungen vorgesehen werden kann. Dies bewirkt eine nicht unwesentliche Einsparung an Energie, und im Falle der Verwendung von Batterien auch zu deren längeren Betriebsdauer. Einem Fachmann ist zudem bekannt, dass Zimmerpflanzen möglichst in grösseren Zeitabständen, beispielsweise von mehreren Tagen, gewässert werden sollten, damit das Erdreich immer wieder genügend austrocknet um Sauerstoff aufzunehmen, wodurch das Pflanzenwachstum positiv beeinflusst wird.

Daher kann über das Bedien- und Anzeigepanel ein Modus "Indoor" und "Outdoor" vorhanden sein. Durch solche Modi wird einerseits eine Zeitspanne zwischen zwei Feuchtemessungen definiert, andererseits werden dadurch auch vorzugsweise die Parameter einer Nachregelung entsprechend angepasst. So kann z.B. für den Aussenbereich eine Zeitspanne zwischen zwei Messungen von 1 Stunde, im Innenbereich eine von 6 Stunden gewählt werden, da sich dort die Feuchte relativ langsam ändert. Zudem ist im Innenbereich ein minimaler Abstand zwischen zwei Giessvorgängen typischerweise im Bereich von 3 - 7 Tagen optimal, während im Aussenbereich ein minimaler Abstand zwischen zwei Giessvorgängen durchaus zwischen 2 und 5 Stunden liegen kann.

Im Grenzfall kann es bei Indoor - Anwendungen dazu kommen, dass eine Giessmenge immer weiter erhöht wird. Dies kann bei kleinen Pflanztöpfen, in denen relativ grosse Pflanzen mit hohem Wasserverbrauch eingepflanzt sind, der Fall sein. Dort könnte der Umstand eintreten, dass ein minimaler eingestellter Zeitabstand zwischen zwei Giesszyklen nicht erreicht wird, wodurch die Regelung immer mehr Wasser zuführen würde. Dieses könnte aber durch die geringe Menge Erde, die in kleinen Pflanztöpfen verfügbar ist, nicht absorbiert werden. Überschüssiges Wasser würde überlaufen, vorzugsweise wieder in einen Vorratsbereich. Im Extremfall könnte es dazu kommen, dass vorrätiges Wasser permanent umgepumpt wird. Dies ist zu vermeiden. Dies kann nun dadurch geschehen, dass die Regelung nach einer bestimmten Zahl an aufeinander folgenden Giessvorgängen automatisch von einem Indoor-mode auf einen Outdoor - Mode umschaltet. Dadurch kann der minimale Abstand zwischen zwei Giesszyklen beispielsweise auf wenige Stunden reduziert werden und dadurch ein Überschiessen der Regelung verhindert werden.

Weitere auf dem Bedien- und Anzeigepanel einstellbare Werte sind die Wassermenge pro Giessvorgang, welche je nach Pflanze variieren kann und bei Kübelpflanzen vorzugsweise in Wassermengen von 50 ml bis 100 Liter, in Schritten von beispielsweise 50ml bis 11, beispielsweise 100 ml oder 250ml. Auch Anfangswerte, Minimal- und Maximalwerte einer Anzahl von durchführbaren Messzyklen bis zu einem Giessvorgang, oder - wie im vorhergehenden Abschnitt bereits erwähnt - eine maximale Anzahl von Wassererhöhungen bei hintereinander erfolgenden Giessvorgängen, kann über ein Bedienpanel eingestellt werden.

Die Regeleinheit kann weitere Funktionen beinhalten. Beispielsweise kann ein Kontrollmechanismus vorgesehen sein, der feststellt, ob eine Wasserzufuhr stattfindet, z. B. ob ein Durchflusssensor oder ein Ventil anspricht. Findet die Wasserzufuhr nicht statt, d. h. spricht ein Durchflusssensor nicht an, so muss angenommen werden, dass entweder kein Wasser mehr im Vorratsbehälter vorhanden ist, oder aber die Wasserzufuhrleitung ist verstopft. Ein Feststellen eines Nicht-Ansprechens eines Durchflusssensors aktiviert einen Alarm. Dieser kann optisch, beispielsweise durch eine Anzeige auf einem Display, ein Blinklicht, oder auch akustisch, beispielsweise durch einen Piepton geschehen. Auch das Einstellen und Überwachen eines kritischen unteren Schwellwertes eines Ladezustandes z. B. einer Batterie, kann über die Vorrichtung erfolgen.

Vorzugsweise wird bei allen Fehlfunktionen der Vorrichtung ein solcher Alarm angezeigt oder einem Benutzer mitgeteilt. Eine Möglichkeit besteht darin, einen Datenausgang zur Ansteuerung eines Telefon-Modems, eines GSM - Modems in eine Regelelektronik zu integrieren. Bei Auslösung eines Alarms wird dann eine entsprechende elektronische oder Kurznachricht (email oder SMS) an einen vorher bestimmten Empfänger gesendet.

Die Vorrichtung kann zudem mit einem Thermostaten versehen sein, der in die Regeleinheit integriert ist. Wird beispielsweise, wie in der Anmeldung CH 527/05 beschrieben, ein Mini-Wintergarten über einer Pflanze angebracht, so ist die Regeleinheit, zusammen mit einer entsprechenden Heizung/Kühlung, in der Lage die Temperatur innerhalb der Pflanzenabdeckung auf einem bestimmten, einstellbaren Wert einzuregeln.

Mehrere der erfindungsgemässen Vorrichtungen können zu einer Anordnung zusammengestellt sein. Die einzelnen Vorrichtungen sind dann untereinander verbunden, vorzugsweise derart, dass über ein oder ein einzelnes Bedienpanel, der Status sämtlicher Vorrichtungen abfragbar und individuelle Einstellungen einstellbar sind. Eine solche Anordnung ist vorzugsweise derart verschaltet und gesteuert, dass lediglich eine einzelne Vorrichtung sich in einem Giessvorgang befindet. Dadurch reicht im wesentlichen die Auslegung für eine Stromversorgung einer einzelnen Vorrichtung auch für eine zentrale Stromversorgung.

Die Vorrichtung kann auch einen Lichtsensor, z. B. eine Photozelle, aufweisen. Vorhandenes Licht, gegebenenfalls auch seine Intensität, können in die Feuchte- oder Trendberechnungen miteinbezogen werden. Vorzugsweise wird eine Feuchtemessung in regelmässigen Zeitabständen durchgeführt. Mit einem Lichtsensor ist es jedoch auch möglich die Bewässerungsvorrichtung in einen Tag/Nacht-Betrieb zu versetzen oder allgemein mit weiteren Randbedingungen, z. B. Sperrzeiten, zu versehen. Beispielsweise können in der Nacht Pumpen- und Wassergeräusche unerwünscht sein. Andererseits kann eine Besprengung eines Rasens zu gewissen Tageszeiten unerwünscht sein, da sich Personen auf dem oder in der Nähe des Rasens aufhalten.

Beispielhafte, bevorzugte Ausführungsformen des erfindungsgemässen Bewässerungssystems werden anhand der folgenden Figuren im Detail beschrieben. Dabei zeigen:
- **Figur 1**: schematische Darstellung der erfindungsgemässen Vorrichtung inkl. Sensor;
- **Figur 2**: eine mögliche Gestaltung der erfindungsgemässen Vorrichtung ohne Sensor und Wasserzufuhr;
- **Figur 3**: eine schematische Darstellung einer Bewässerungsanlage;
- **Figur 4**: Bewässerungsvorrichtung mit separatem Wasservorratsbehälter;
- **Figur 5**: Bewässerungsvorrichtung in Pflanztopf integriert;

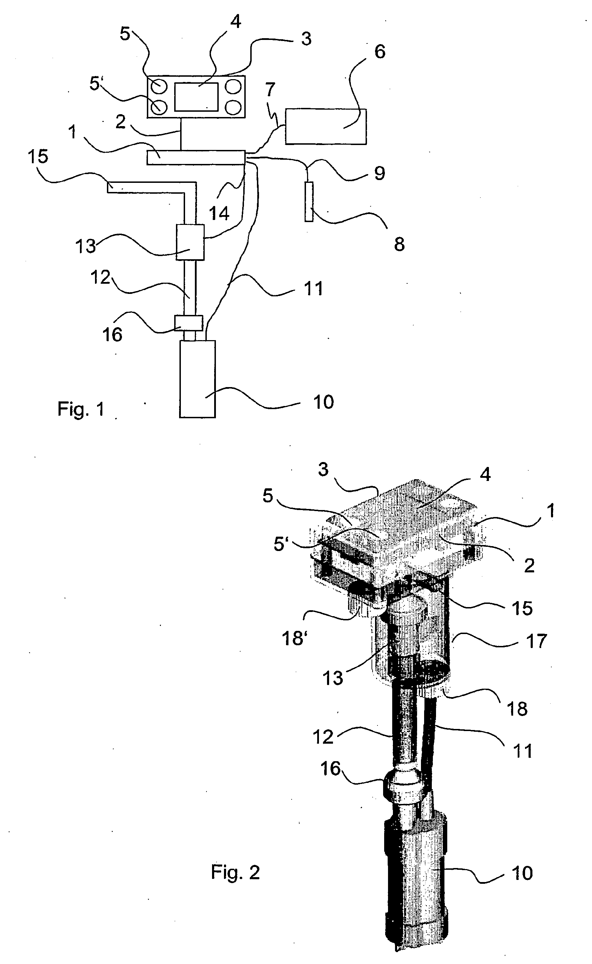

In **Figur 1** ist eine Steuerelektronik 1 mittels elektrischen Verbindungen 2 mit einem Bedienpanel 3 verbunden. Dieses beinhaltet ein Display 4 und Bedienelemente 5, 5'. Eine Stromversorgung 6 beispielsweise in Form einer Batterie, eines Solarpanels, allenfalls mit einem Ladegerät und einer Zwischenspeicherbatterie, oder eines Netzgerätes, ist mittels eines Kabels 7 mit der Steuerelektronik verbunden. Der Bodenfeuchtesensor 8 ist mit einem weiteren Kabel 9 ebenfalls mit der Steuerelektronik verbunden.

Eine Tauchpumpe 10, versehen mit einem Rückschlagventil 16, die mittels eines Kabels 11 von der Steuerelektronik aus angesteuert werden kann, ist über einen Schlauch 12 mit einem elektronischen Durchflusssensor 13, einem Wasserdurchflussmesser, verbunden, der wiederum seine Signale mittels einer weiteren Verbindung 14 an die Steuerelektronik 1 weitergibt. Ein Schlauch 15, der von der Tauchpumpe und der Vorrichtung wegführt, erlaubt die Verteilung des durch die Tauchpumpe geförderten Wassers.

Die Steuerelektronik kann mit einer Software ausgestattet werden, die auf der Basis von Vergangenheitswerten, Nachstellungen der Wassermenge pro Giessvorgang automatisch vornimmt. Anfangs eingestellte Werte müssen somit nicht sehr genau sein, weil das Regelsystem eine Nachjustierung bezüglich Häufigkeit und Menge von der Pflanze zuzuführendem Wasser erlaubt.

Bei neu eingebrachter Bewässerungsvorrichtung werden somit alle oder gewisse der folgenden Werte eingestellt: Feuchteschwelle, Giessmengen, eine minimale Anzahl von Messzyklen bis gegossen wird, eine maximale Anzahl von Messzyklen bis gegossen wird.

Wird nun beispielsweise ein minimaler Wert von vier Messzyklen und ein maximaler Wert von 16 Messzyklen eingestellt, so wird die Wassermenge pro Giessvorgang erhöht, sobald ein unterer Feuchteschwellwert bereits nach 1, 2 oder 3 durchgeführten Feuchtemessungen erreicht oder unterschritten wird. Wird nun ein unterer Feuchteschwellwert auch nach 16 Messzyklen nicht erreicht, bedeutet dies, dass das Substrat zuviel Feuchtigkeit hat und die Giessmenge wird vorzugsweise automatisch reduziert.

Es ist auch möglich beispielsweise die absoluten Feuchteangaben für eine Trendauswertung zu verwenden, also bspw. die Geschwindigkeit in der sich die Feuchte im Substrat zwischen zwei oder mehreren Messzyklen verändert. Auch können obere Feuchteschwellen gesetzt werden und ein Erreichen dieser Schwelle, bspw. die Häufigkeit des Erreichens der Schwelle über mehrere Messzyklen, zur Nachjustierung der Wassermenge verwendet werden.

Auf dem Display 4 können diverse eingestellte, einstellbare und gemessene Angaben angezeigt werden, z. B. auch die aktuelle Bodenfeuchte, beispielsweise in Form eines laufenden Zeigers oder in Form von Ziffern, so dass ein Betreuer immer die Möglichkeit hat, den Zustand innerhalb des Pflanztopfes zu kontrollieren.

Eine weitere Möglichkeit ist die Integration diverser Kontrollfunktionen und Alarme, beispielsweise eines Wasser- und/oder Frostalarms. Der vorzugsweise verwendete und eingangs genannte Feuchtesensor misst ohnehin die aktuelle Umgebungstemperatur. Sinkt diese unter einen kritischen Wert, so kann dies durch ein entsprechendes Symbol am Display und/oder anderweitig optisch oder akustisch angezeigt werden. Der Betreuer kann dann entsprechende Massnahmen zur Sicherung der Pflanze vor zu tiefen Temperaturen vornehmen.

Figur 2 zeigt eine bevorzugte Ausführungsform der Bewässerungsvorrichtung., wobei für gleiche Elemente, gleiche Bezugszeichen verwendet wurden. Die Stromversorgung, wie auch der Bodenfeuchtesensor sind nicht dargestellt. Neben den bereits oben genannten Elementen erkennt man ein wasserdicht verschlossenes Gehäuse 17, das alle elektronischen Komponenten umschliesst. Die Kabel werden vorzugsweise durch wasserdichte Kabeldurchführungen 18, 18' nach aussen zur Stromversorgung, dem Sensor und der Tauchpumpe geführt.

Die Abmessungen des Bedienpanels liegen typischerweise in einem Bereich von wenigen Zentimeter, vorzugsweise 4-12cm, beispielsweise 5-10cm, z. B. 6cm. Die Länge der Schlauch- und Kabelverbindung zur Tauchpumpe kann variieren und liegt in einem bevorzugten Bereich von 5 cm bis 2 Meter, beispielsweise zwischen 5cm und 1 Meter, z. B. 15-25cm. Um ein Optimum der Vorrichtung zu erhalten, - energie- und bewässerungstechnisch -, sollte die Länge der Schläuche auf die Pumpleistung der Pumpe angepasst sein und vice versa. Allgemein ist die Vorrichtung vorzugsweise derart kompakt gestaltet, dass sie auch in kommerzielle Pflanztöpfe in Haushalt und Balkon, z. B. Balkonkisten, eingebracht werden kann.

Der erfindungsgemässe Ablauf der Steuerung kann in einer bevorzugten Ausführungsform wie folgt beschrieben werden:
In bestimmten, wählbaren Zeitintervallen, vorzugsweise zwischen 0.5 - 5 Stunden, z.B. alle 1-3 Stunden, wird der Feuchtesensor 8, welcher als Feuchtesensor mit gepulst betriebenem thermischem Messverfahren arbeitet, durch die Ansteuerelektronik 1 kurzzeitig, d.h. wenige Sekunden, z.B. 2-5s, mit einem, vorzugsweise genau definierten, Energieimpuls erwärmt und anschliessend die Abkühlkurve aufgezeichnet. Daraus wird eine Abkühlzeit bestimmt und mit einem einstellbaren Schwellwert verglichen. Liegt die gemessene Zeit unter der Schwellwertzeit, so wird keine Aktion ausgelöst. Liegt sie jedoch höher, dann wird die Pumpe aktiviert. Diese wird solange angesteuert, bis der Durchflusssensor 13 einen einstellbaren Wert misst. Daraufhin wird die Pumpe wieder ausgeschaltet. Dieser Vorgang wiederholt sich in den oben genannten Zeitintervallen. Sämtliche Vorgänge geschehen bevorzugt automatisch und auf elektronischem Weg.

Ergibt sich nun, dass sich der Wasserbedarf der Pflanze verändert, beispielsweise durch Wachstum, höhere Sonneneinstrahlung etc., so merkt die Regeleinheit, dass öfter als eine vorab eingestellte Häufigkeit, gegossen werden muss. Die Regeleinheit erhöht somit automatisch die Wassermenge pro Giessvorgang. Die Häufigkeit ist vorzugsweise eine Anzahl von durchgeführten Messzyklen oder auch eine seit einem letzten Giessvorgang vergangene Zeit. Eine Anzahl der Erhöhung der Wassermenge bei aufeinanderfolgenden Giessvorgängen ist vorzugsweise nach oben begrenzt. Wird nach einer maximalen Anzahl Erhöhungen aufgrund der gemessenen Feuchte wiederum eine Wassererhöhung verlangt, wird anstelle einer Wassererhöhung vorzugsweise auf eine grössere Giesshäufigkeit gewechselt (Indoor/Outdoor-Modus). Dadurch kann verhindert werden, dass grössere Wassermengen als bei einem Giessvorgang von einem Topf aufnehmbar verabreicht werden.

Die einzelnen Schritte werden bevorzugt alle von der Regelelektronik überwacht und gesteuert. Es ist selbstverständlich auch möglich, dass einzelne Schritte wie beispielsweise ein Nachgiessen oder eine Erhöhung/Erniedrigung der Wassermenge zwar angezeigt, jedoch von Hand vorgenommen werden.

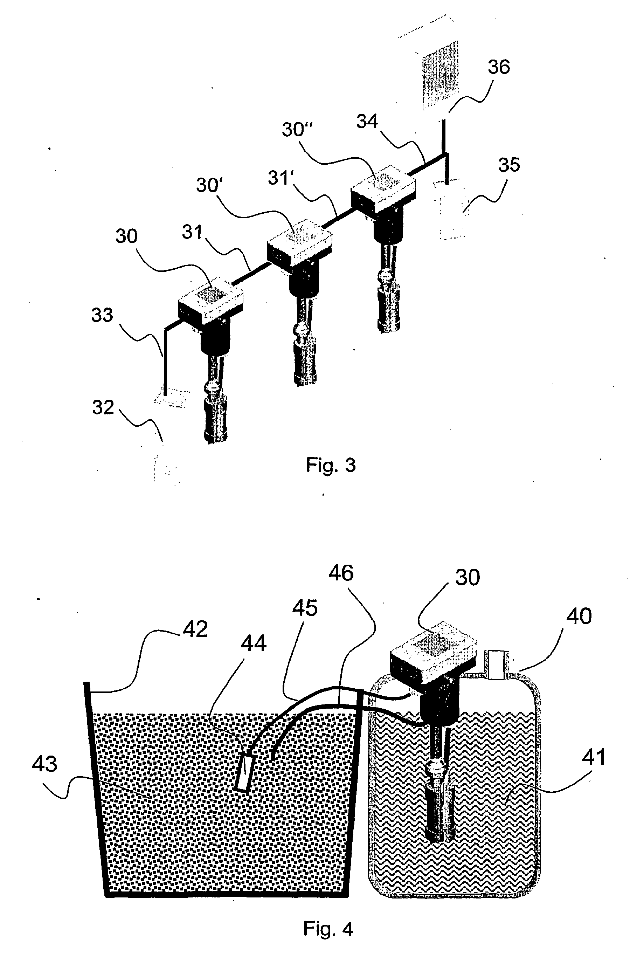

Eine weitere sehr sinnvolle Ergänzung des Funktionsumfanges einer Regeleinheit besteht in der Möglichkeit, zwei oder mehrere Bewässerungseinheiten, z. B. mittels eines digitalen Busses, miteinander zu verkoppeln. Diese Konfiguration ist in **Figur 3** schematisch dargestellt. Die Bewässerungsanlagen 30, 30' und 30" sind mittels Kabel 31, 31' miteinander verbunden. Die Kabel umfassen einen digitalen Bus aber auch eine Stromversorgung, die mittels eines weiteren Kabels 33 mit einer Stromversorgungseinheit 32 verbunden ist. Am einen Ende der grundsätzlich beliebig langen Kette von Bewässerungsanlagen ist mittels Kabel 34 ein GSM Modem 35 angeschlossen. Ausserdem ist eine Zentraleinheit 36 zur Darstellung und Kontrolle aller angeschlossenen Anlagen angeschlossen. Dies ermöglicht eine Kontrolle einer z.B. grossen, weit verzweigten Anlagen, durch eine günstig gelegene Zentraleinheit. Ausserdem ist dadurch nur eine einzelne Bedien- und Anzeigeeinheit erforderlich.

Eine solche Konfiguration erlaubt z.B. die Optimierung der zentralen Stromversorgung, da das gleichzeitige Ansprechen der Pumpen zweier oder mehrerer Anlagen gesteuert und verhindert werden kann. Dadurch kann die Stromversorgung lediglich auf die Belastung einer Pumpe ausgelegt werden. Ein digitaler Bus erlaubt auch die Benachrichtigung des Betreuers durch ein einziges GSM Modem, da alle Informationen, insbesondere Alarme, aller verbundenen Anlagen an einem einzelnen Ausgang abgegriffen werden können.

Die erfindungsgemässe Bewässerungsanlage ist so gestaltet, dass sie sowohl in bestehende Pflanztöpfe integriert, als auch extern von den Pflanztöpfen eingesetzt werden kann.

**Figur 4** zeigt eine Konfiguration, bei der die miniaturisierte Bewässerungsvorrichtung 30 in einen separaten Wasservorratsbehälter 40 integriert ist und von dort einen Pflanztopf 42 mit Erde 43 über einen Wasserverteilschlauch 46 bedient. Diese Konfiguration ist z.B. besonders dann angebracht, wenn man nur zeitweise, z.B. während einer längeren Abwesenheit, eine automatische Bewässerung benötigt. Ein Vorteil dieser Anordnung liegt darin begründet, dass der Wasservorratsbehälter praktisch beliebig gross sein kann, so dass auch lange Abwesenheiten überbrückt werden können. Ausserdem ist ein solcher Behälter billig und kann leicht überall plaziert werden.

Nachteilig ist, dass sowohl das Kabel 45 zum Sensor 44 als auch der Wasserschlauch 46 sichtbar sind, wobei dieser Nachteil bei einer vorübergehenden Abwesenheit nicht ins Gewicht fällt.

Wird ein Wasservorratsbehälter über Topfniveau angeordnet, kann gegebenenfalls auf eine Pumpe verzichtet werden. Die Regeleinheit steuert somit lediglich ein Öffnen und Schliessen eines Ventils für die Wasserzufuhr.

Der Wasserverteilschlauch kann sich auch in mehrere Zweige aufteilen, so dass mehrere Pflanztöpfe - vorteilhafterweise mit ähnlicher Grösse und Bepflanzung - mit Wasser versorgt werden können.

Pflanzenzusätze, wie bspw. Dünger, können direkt in den Wasservorratsbehälter gegeben werden.

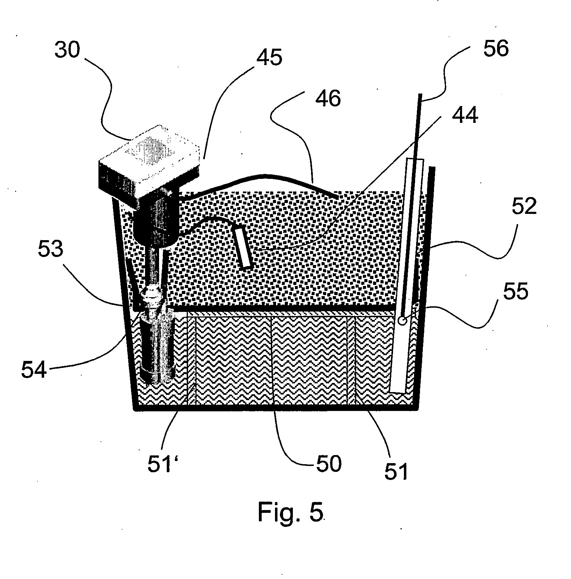

**Figur 5** zeigt eine Lösung, bei der die Bewässerungsanlage voll in einem Pflanztopf integriert ist. Dabei wird durch Abstandhalter 51, 51' und einer Zwischenplatte 50 ein Volumen abgetrennt, das als Wasservorratsvolumen verwendet werden kann. Die Bewässerungsvorrichtung ist durch eine Ausnehmung 54 in der Zwischenplatte 50 von oben durchgesteckt, so dass die Tauchpumpe in das vorrätige Wasser möglichst tief eintaucht. Eine Schicht aus wasserdurchlässigem Vlies 53 mit einer Ausnehmung verhindert, dass Erde von oben ins Wasser geraten kann.

Ein Rohr 52, das ebenfalls durch eine Ausnehmung in der Zwischenplatte hindurch gesteckt wird, dient zum Auffüllen des Wasservorrats. In dieses Rohr kann auch ein " Schwimmkörper 55 mit einem Messstab 56 eingebracht werden, der als Füllstandanzeiger dient.

Wird die Anlage mittels Batterien oder aufladbaren Akkus betrieben, so können diese ebenfalls in einem wasserdichten, rohrförmigen Batterieschacht untergebracht im Pflanztopf integriert werden, wobei die Batterien in diesem Falle die sehr gleichmässige Temperatur der umgebenden Erde annehmen, was die Lebensdauer der Batterien erhöht.

Selbstverständlich kann die Tauchpumpe auch durch eine Pumpe ersetzt werden, die sich ausserhalb des Wasservorrats befindet. Ausserdem ist es möglich, die Pumpe durch ein durch die Steuerelektronik angesteuertes Magnetventil zu ersetzen, so dass das Wasser direkt ab Wassemetz bezogen werden kann.

## Patentansprüche

1. Verfahren zur Bewässerung von Pflanzen mittels eines elektronisch arbeitenden Regelsystems, wobei Substratfeuchte in Zeitabständen gemessen wird, **dadurch gekennzeichnet, dass** Messwerte einer Mehrzahl von Messungen gespeichert werden, und mit gespeicherten Messwerten ein Feuchtetrend des Substrates abgeleitet wird, der zur Nachregelung einer zu giessenden Wassermenge herangezogen wird.

2. Verfahren nach Anspruch 1, wobei eine Anzahl von Messzyklen zwischen zwei Giessvorgängen zur Nachregelung der Wassermenge herangezogen wird.

3. Verfahren nach Anspruch 2, wobei bei einer Anzahl von Messzyklen zwischen zwei Giessvorgängen, welche Anzahl kleiner als eine vorgegebene Anzahl ist, die Wassermenge erhöht wird.

4. Verfahren nach Anspruch 2 oder 3, wobei bei einer Anzahl von Messzyklen zwischen zwei Giessvorgängen, welche Anzahl grösser als eine vorgegebene Anzahl ist, die Wassermenge reduziert wird.

5. Verfahren nach einem der Ansprüche 1-4, aufweisend zwei Messmodi, welche sich zumindest durch einen unterschiedlichen minimalen Zeitabstand zwischen zwei nachfolgenden Giessvorgängen unterscheiden, und wobei vom einen Messmode in den anderen Messmode übergegangen wird, sobald eine vorgegebene Anzahl von Erhöhungen der Wassermenge überschritten wird.

6. Verfahren nach Anspruch 5, wobei bei einer Überschreitung der vorgegebenen Anzahl der Erhöhungen der Wassermenge bei aufeinander folgenden Giesszyklen die Häufigkeit der Giesszyklen erhöht wird.

7. Verfahren nach einem der vorangehenden Ansprüche, wobei eine errechnete Wassermenge durch einen elektronisch arbeitenden Durchflusssensor (13) gemessen wird und bei einem Nichtansprechen des Durchflusssensors ein Alarm, insbesondere ein optischer oder akustischer Alarm, ausgelöst wird.

8. Verfahren nach einem der vorhergehenden Ansprüche, wobei bei einem Fehlverhalten des Regelsystems, insbesondere bei einem Nichtansprechen eines Durchflusssensors (13), eine Mitteilung an einen Benutzer versendet wird.

9. Vorrichtung (30) zur automatischen Bewässerung von Pflanzen beinhaltend einen Erdfeuchtesensor (8,44) und eine elektronische Regelschaltung, mit welcher Signale des Erdfeuchtesensors empfangbar sind und ein mit der Regelschaltung verbundenes Mittel zur Steuerung einer Wasserzufuhr, **dadurch gekennzeichnet, dass** die Regelschaltung einen Datenspeicher enthält, in dem Messwerte über einen bestimmten Zeitraum aufzeichenbar sind, und dass die Regelschaltung eine Auswerteelektronik beinhaltet, mit welcher ein Trend der Messwerte feststellbar und zu einer Korrektur einer zu giessenden Wassermenge verwendbar ist, durch eine dem Trend entsprechende Ansteuerung des Mittels zur Steuerung einer Wasserzufuhr.

10. Vorrichtung (30) nach Anspruch 9, wobei sie ein Bedienpanel (3) aufweist, über welches unterschiedliche Schwellwerte für eine kritische Trockenheit verschiedener Pflanzentypen und/oder eine zu giessende Wassermenge pro Giesszyklus und/oder unterschiedliche Messmodi mit unterschiedlich eingestellten Giesshäufigkeiten, einstellbar sind.

11. Vorrichtung (30) nach Anspruch 9 oder 10, wobei ein Bedienpanel (3) eine Anzeige einer aktuellen Bodenfeuchte und/oder Anzeige der Funktion des Mittels zur Steuerung einer Wasserzufuhr und/oder Anzeige eines Ladezustands bei Batteriebetrieb der Vorrichtung enthält.

12. Vorrichtung (30) nach Anspruch 11, wobei mindestens eine Anzeige eine Alarmanzeige ist, mit welcher bei einem Nichtansprechen eines Durchflusssensors (13) während eines Giessvorgangs und/oder bei Erreichen einer unteren Schwelle eines Ladezustandes ein Alarm auslösbar ist.

13. Vorrichtung (30) nach einem der Ansprüche 9-12, mit einem Temperatursensor zur Steuerung einer Heizung/Kühlung eines über einer Pflanze anzubringenden Wintergartens.

14. Vorrichtung (30) nach einem der Ansprüche 9-13, mit einem daran angeschlossenen Telefonmodem zur Versendung von Alarmmitteilungen.

15. Vorrichtung (30) nach einem der Ansprüche 9-14, mit einer Tauchpumpe (10) zur Erzeugung eines für einen Giessvorgang notwendigen Wasserflusses, welche Pumpe von der Regelschaltung ansteuerbar ist.

16. Anordnung einer Mehrzahl von Vorrichtungen (30, 30', 30") gemäss einem der Ansprüche 9-15, **dadurch gekennzeichnet, dass** die Mehrzahl von Vorrichtungen über Signalverbindungen miteinander verbunden sind.

17. Anordnung gemäss Anspruch 16, wobei über die Signalverbindung Informationen über den momentanen Status einer einzelnen Vorrichtung (30,30',30") von jeder der verbundenen Vorrichtungen abfragbar ist.

18. Anordnung nach Anspruch 16 oder 17, wobei sich maximal eine einzige Vorrichtung (30, 30', 30") in einem Giesszyklus befindet.

19. Anordnung nach einem der Ansprüche 16-18, wobei die Signalverbindung mit einer zentralen Anzeige (36) verbunden ist zum Anzeigen des aktuellen Status aller Vorrichtungen (30, 30', 30").

## Claims

1. A method for irrigating plants by way of an electronically functioning regulation system, wherein substrate humidity is measured at time intervals, **characterised in that** measurement readings of a plurality of measurements are stored and a humidity trend of the substrate is derived from stored measurement readings, which humidity trend is used for the readjustment of a water quantity to be watered.

2. A method according to claim 1, wherein a number of measurement cycles between two watering procedures is used for readjustment of the water quantity.

3. A method according to claim 2, wherein the water quantity is increased when a number of measurement cycles between two watering procedures is smaller than a predefined number.

4. A method according to claim 2 or 3, wherein the water quantity is reduced when a number of measurement cycles between two watering procedures is larger than a predefined number.

5. A method according to any one of claims 1 to 4 comprising two measurement modes, which differ at least by a different minimal time interval between two consecutive watering procedures, and wherein there is a switch from one measurement mode to the other measurement mode as soon as a predefined number of increases of the water quantity is exceeded.

6. A method according to claim 5, wherein the frequency of the watering cycles is increased when the predefined number of increases of the water quantity in consecutive watering cycles is exceeded.

7. A method according to any one of the preceding claims, wherein a computed water quantity is measured by an electronically functioning throughput sensor (13) and an alarm, in particular an optical or acoustic alarm, is activated when the throughput sensor (13) does not respond.

8. A method according to any one of the preceding claims, wherein a communication is sent to a user in case of a faulty behaviour of the control system, in particular when the throughput sensor (13) does not respond.

9. An installation (30) for the automatic irrigation of plants containing a soil humidity sensor (8, 44) and an electronic control circuit, with which signals of the soil humidity sensor may be received, and a means for the control of a water supply connected to the control circuit, **characterised in that** the control circuit contains a data memory, in which measurement readings may be recorded over a certain time period, and that the control circuit contains evaluation electronics, with which a trend of the measurement readings may be ascertained and may be used for a correction of a water quantity to be watered by way of an activation of the means for the control of a water supply, in accordance with the trend.

10. An installation (30) according to claim 9, comprising an operating panel (3) for the setting of different threshold values for a critical dryness of different plant types and/or a water quantity to be applied per watering cycle and/or different measurement modes with differently set watering frequencies.

11. An installation (30) according to claim 9 or 10, wherein an operating panel (3) contains a display of a current ground humidity and/or a display of the function of the means for the control of waster supply, and/or a display of a charge condition if the installation is battery-operated.

12. An installation (30) according to claim 11, wherein at least one display is an alarm display by which an alarm may be activated if a throughput sensor (13) does not respond during a watering procedure and/or when a charge condition reaches a lower threshold.

13. An installation (30) according to any one of claims 9 to 12, with a temperature sensor for the control of a heating/cooling of a conservatory to be placed over a plant.

14. An installation (30) according to any one of claims 9 to 13, with a telephone modem connected thereto tor sending alarm communications.

15. An installation (30) according to any one of claims 9 to 14, with a submersible pump (10) for producing a water flow necessary for a watering procedure, which pump can be activated by the control circut.

16. An arrangement with a plurality of devices (30, 30', 30") according to any one of claims 9 to 15, **characterised in that** the plurality of devices arc connected to one another via signal connections.

17. An arrangement according to claim 16, wherein information on the momentary Status of an individual device (30, 30', 30") may be inquired from each of the connected devices via the signal connection.

18. An arrangement according to claim 16 or 17, wherein maximally one single device (30, 30', 30") is engaged in any one watering cycle.

19. An arrangement according to any one of claims 16 to 18, wherein the signal connection is connected to a central display (36) for displaying the current status of all devices (30, 30', 30").

## Revendications

1. Procédé d'arrosage de plantes au moyen d'un système de régulation travaillant par voie électronique, dans lequel l'humidité du substrat est mesurée à intervalles de temps,
**caractérisé en ce que**
des valeurs de plusieurs mesures sont conservées en mémoire et une tendance de l'humidité du substrat est dérivée des valeurs de mesure conservées en mémoire et est utilisée pour la régulation ultérieure de la quantité d'eau à verser.

2. Procédé selon la revendication 1, dans lequel pour réguler finement la quantité d'eau, plusieurs cycles de mesure interviennent entre deux opérations de versage.

3. Procédé selon la revendications 2, dans lequel la quantité d'eau est augmentée lorsque le nombre de cycles de mesure entre deux opérations de versage est inférieur à un nombre prédéterminé.

4. Procédé selon les revendications 2 ou 3, dans lequel la quantité d'eau est diminuée lorsque le nombre des cycles de mesure entre deux opérations de versage est plus grand qu'un nombre prédéterminé.

5. Procédé selon l'une des revendications 1 à 4, présentant deux modes de mesure qui se distinguent au moins par une différence entre les intervalles de temps minimum entre deux opérations de versage successives, avec un basculement d'un mode de mesure à l'autre mode de mesure dès qu'un nombre prédéterminé d'augmentations de la quantité d'eau est dépassé.

6. Procédé selon la revendication 5, dans lequel la fréquence des cycles de versage est augmentée lorsque le nombre prédéterminé d'augmentations de la quantité d'eau est dépassé sur des cycles de versage successifs.

7. Procédé selon l'une des revendications précédentes, dans lequel la quantité d'eau calculée est mesurée par un détecteur d'écoulement (13) qui travaille par voie électronique et, lorsque le détecteur d'écoulement ne répond pas, une alarme, en particulier une alarme visuelle ou une alarme acoustique, est déclenchée.

8. Procédé selon l'une des revendications précédentes, dans lequel lorsque le système de régulation se comporte de manière défectueuse, en particulier lorsqu'un détecteur de passage (13) ne répond pas, un message est envoyé à l'utilisateur.

9. Dispositif (30) d'arrosage automatique de plantes, qui contient un détecteur (8, 44) de l'humidité du sol et un circuit électronique de régulation qui reçoit les signaux du détecteur d'humidité du sol, ainsi qu'un moyen de commande d'apport d'eau relié au circuit de régulation,
**caractérisé en ce que**
le circuit de régulation contient une mémoire de données dans laquelle des valeurs de mesure peuvent être écrites pendant un laps de temps défini et
**en ce que** le circuit de régulation contient une électronique d'évaluation qui permet de constater une tendance dans les valeurs de mesure et qui peut être utilisée pour corriger la quantité d'eau à verser par une activation, correspondant à la tendance, du moyen de commande d'apport d'eau.

10. Dispositif (30) selon la revendication 9, qui présente un tableau de commande (3) qui permet de définir différentes valeurs de seuil de sécheresse critique de diftérents types de plantes et/ou la quantité d'eau à verser par cycle de versage et/ou différents modes de mesure qui présentent différentes fréquences de versage.

11. Dispositif (30) selon les revendications 9 ou 10, dans lequel un tableau de commande (3) contient un affichage de l'humidité actuelle du sol et/ou un affichage du fonctionnement du moyen de commande de l'apport d'eau et/ou un affichage de l'état de charge lorsque le dispositif fonctionne sur batterie.

12. Dispositif (30) selon la revendication 11, dans lequel au moins un affichage est un affichage d'alarme par lequel une alarme peut être déclenchée lorsqu'un détecteur (13) d'écoulement ne réagit pas pendant une opérations de versage et/ou lorsque l'état de charge a atteint un seuil inférieur.

13. Dispositif (30) selon l'une des revendications 9 à 12, qui présente une sonde de température qui commande un chauffage et/ou refroidissement d'un jardin d'hiver qui est placé autour d'une plante.

14. Dispositif (30) selon l'une des revendications 9 à 13, auquel est raccordé un modem téléphonique pour l'envoi de messages d'alarme.

15. Dispositif (30) selon l'une des revendications 9 à 14, doté d'une pompe immergée (10) qui forme l'écoulement d'eau nécessaire pour une opération de versage, laquelle pompe pouvant être commandée par le circuit de régulation.

16. Ensemble constitué de plusieurs dispositifs (30, 30', 30'') selon l'une des revendications 9 à 15, **caractérisé en ce que** les différents dispositifs sont reliés les uns aux autres par des liaisons de signalisation.

17. Ensemble selon la revendication 16, dans lequel des informations sur l'état instantané d'un des différents dispositifs (30, 30', 30") peuvent être demandées de chacune des dispositifs raccordés.

18. Ensemble selon les revendications 16 ou 17, dans lequel au plus un seul dispositif (30, 30', 30") à la fois est placé dans un cycle de versage.

19. Ensemble selon l'une des revendications 16 à 18, dans lequel la liaison de signalisation est reliée à un affichage central (36) qui affiche l'état actuel de tous les dispositifs (30, 30', 30").
